# EUROPÄISCHE PATENTSCHRIFT

(11) **EP 2 051 851 B1**
(45) Veröffentlichungstag und Bekanntmachung des Hinweises auf die Patenterteilung: **04.04.2012**
(21) Anmeldenummer: 07801680.5
(22) Anmeldetag: 16.08.2007
(51) Int. Cl.: B32B 7/12, E04D 5/12

(54) **BAHN UND KLEBEBAND**
WEB AND ADHESIVE STRIP
BANDE ET RUBAN ADHÉSIF

(30) Priorität: 18.08.2006 DE 102006038708; 20.09.2006 DE 102006044754
(43) Veröffentlichungstag der Anmeldung: 29.04.2009
(73) Patentinhaber: EWALD DÖRKEN AG, 58313 Herdecke (DE)
(72) Erfinder: SCHRÖER, Jörn, 58313 Herdecke (DE); SCHWAAB, Gilles, 44225 Dortmund (DE)
(74) Vertreter: Gesthuysen, von Rohr & Eggert
(86) Internationale Anmeldenummer: PCT/EP2007/007219
(87) Internationale Veröffentlichungsnummer: WO 2008/019839

(56) Entgegenhaltungen:
- DE-A1- 10 128 078
- DE-U1- 20 005 974
- DE-U1- 20 012 227
- US-A1- 2002 090 496

## Beschreibung

Die Erfindung betrifft eine Bahn zum Einsatz im Baubereich, mit wenigstens einem lediglich am Außenrand der Bahn vorgesehenen Befestigungsabschnitt zum Verkleben der Bahn mit einem Untergrund oder zum Verkleben mit einer weiteren Bahn.

Im Baubereich eingesetzte Bahnen müssen miteinander oder mit anderen Materialien bzw. Untergründen verklebt werden. Bei den im Baubereich eingesetzten Bahnen kann es sich beispielsweise um Unterspannbahnen, Unterdeckbahnen, Schalungsbahnen und Fensteranschlussstreifen handeln, die im Außenbereich von Steildächern verwendet werden. Im Innenbereich von Steildächern kommen Windsperren, Dampfsperren, Dampfbremsen und Fensteranschlussstreifen zum Einsatz. Bei Flachdächern werden Dichtungsbahnen, Dampfsperren und Dampfbremsen eingesetzt. Fassadenbahnen, Housewraps und Fensteranschlussstreifen werden im Fassadenbereich benötigt. Darüber hinaus werden Dichtungsbahnen und Mauerwerkssperren bei Grundmauern und Grundplatten eingesetzt. Die im Dach- oder Fassadenbereich eingesetzten Bahnen werden luft- und winddicht miteinander verbunden und sollen die Wasser- und Luftdichtigkeit gewährleisten. Die im Bereich von Grundmauern und Grundplatten eingesetzten Bahnen sollen dagegen im Wesentlichen die Wasserdichtigkeit sicherstellen.

Um die vorgenannten Bahnen miteinander oder mit einem Untergrund zu verbinden, können Klebebänder eingesetzt werden. Darüber hinaus können die Bahnen als solche eine Klebstoffbeschichtung aufweisen, die das Verkleben mit einem Untergrund oder mit einer weiteren Bahn ermöglicht. Selbstklebend ausgerüstete Bahnen können eine Klebstoffbeschichtung einseitig oder beidseitig aufweisen. Bei beidseitiger Klebstoffbeschichtung kann die Klebstoffschicht einer Bahn mit der Klebstoffschicht einer gegenüberliegenden Bahn verklebt werden, um einen Verbund der Bahnen sicherzustellen.

Die aus dem Stand der Technik bekannten selbstklebend ausgerüsteten Bahnen oder die zum Verkleben der Bahnen eingesetzten Klebebänder weisen eine vollflächige Beschichtung mit einem Klebstoff auf, um eine Verklebung der Bahnen mit hoher Festigkeit und ausreichender Dichtheit bzw. Dichtigkeit zu gewährleisten. Darüber hinaus muss eine vergleichsweise große Klebstoffmenge aufgetragen werden, um eine luft- bzw. winddichte Verbindung der Bahnen mit dem Untergrund oder miteinander und/oder die Wasserdichtigkeit sicherzustellen. Dies gilt insbesondere dann, wenn die Bahnen mit Oberflächen verklebt werden sollen, die hydrophobiert, verschmutzt, nass oder in anderer Art und Weise für die Verklebung wenig geeignet sind. Weiterhin weisen die bekannten Bahnen in der Regel keine glatten Oberflächen auf, so dass ein Teil des Klebers beim Verkleben der Bahnen in die Oberfläche eindringt und an der Ausbildung einer Klebeverbindung zwischen der Bahn und dem Untergrund oder einer weiteren Bahn nicht beteiligt ist. Dies gilt insbesondere bei Bahnen mit faserigen Oberflächen.

Sollen zwei Bahnen mit beidseitigem Klebstoffauftrag miteinander verklebt werden, besteht im Übrigen das Problem, dass die Bahnen sehr genau ausgerichtet werden müssen, um die Verklebungsbereiche zumindest überwiegend miteinander zur Deckung zu bringen.

Aus der DE 101 28 078 A1 geht bereits eine Bahn der eingangs genannten Art hervor. Die bekannte Dichtungsbahn weist Befestigungsabschnitte auf, bei denen Dichtkleberzonen vorgesehen sein können, die durch einen klebstofffreien Bereich voneinander getrennt sind. An sich geht es bei diesem Stand der Technik darum, Dichtungsbahnen bereit zu stellen, die auch im Fassadenbereich eine dauerhafte, allen Witterungs- und Umwelteinflüssen widerstehende Befestigung auf und Abdichtung zu allen üblichen Bauwerksuntergründen und untereinander bei schneller, sauberer und einfacher Verlegung ohne zusätzlichen an der Verlegestelle von außen einzubringenden Kleber zu gewährleisten. Zur Lösung dieser Aufgabe ist dort vorgesehen, dass zur Befestigung der Dichtungsbahn am Bauwerksuntergrund oder an der vorherigen Dichtungsbahn einerseits und zur Abdichtung am Bauwerksuntergrund oder zur vorherigen Dichtungsbahn andererseits unterschiedliche Kleber, nämlich ein Dichtkleber und ein Befestigungskleber, verwendet werden. Bei der bekannten Bahn sind außenseitig jeweils nur auf einer Seite der Bahn die Befestigungsabschnitte vorgesehen. Von Nachteil ist, dass sich beim Stand der Technik nicht immer eine hinreichende Dichtigkeit in der Dichtungsbahnebene erreichen lässt.

Aus der DE 200 05 974 U1 und DE 200 12 227 U1 gehen jeweils Dachbahnen hervor, die unterseitig mit einer Klebeschicht versehen sind.

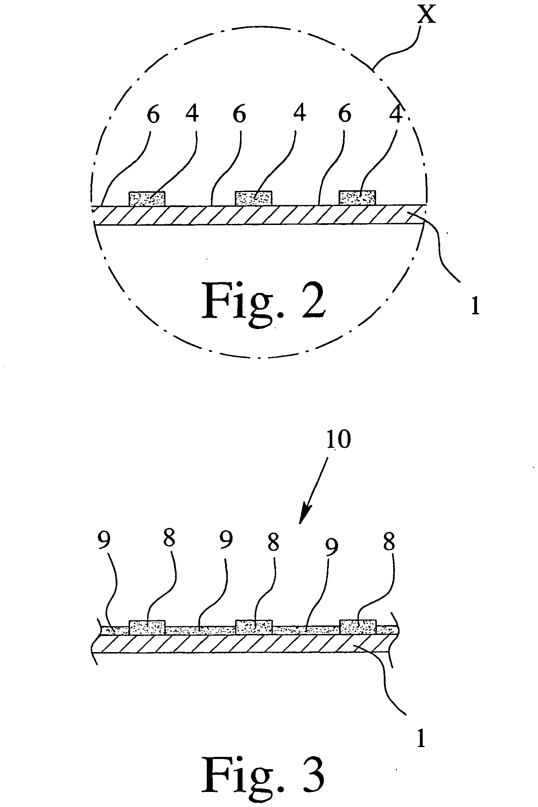

Aus der US 2002/090496 A1 sind Bahnen und Klebestreifen mit wieder ablösbarem Klebstoff bekannt. Bei einer Ausführungsform (Fig. 3 (a)) ist auf der gesamten Oberseite der Bahn ein streifenförmiger Verklebungsbereich vorgesehen, während auf der gesamten Unterseite der Bahn ein weiterer streifenförmiger Verklebungsbereich vorgesehen ist.

Aus der DE 102 01 152 A1 geht bereits eine ein- oder mehrlagige Vlies- oder Folienbahn sowie deren Verlegung für die Dämmung von Gebäuden hervor. Die bekannte Bahn weist Klebeflächen jeweils auf gegenüberliegenden Seiten der Bahn an gegenüberliegenden Rändern auf, wobei eine Verklebung nur in Verbindung mit Flächen gleicher Beschichtung erfolgt. Bei den Klebeflächen handelt es sich jeweils um vollflächige Klebestreifen. Bei der bekannten Bahn wird ein solcher Klebstoff verwendet, bei dem sich eine Klebewirkung nur dann ergibt, wenn er mit einem weiteren Klebestreifen einer anderen Bahn in Verbindung kommt. Aufgrund dieser Klebstoffwahl sind bei der bekannten Bahn auch keine Schutzfolien über den Klebeflächen erforderlich.

Aufgabe der vorliegenden Erfindung ist es, eine Bahn der eingangs genannten Art zur Verfügung zu stellen, die in einfacher Weise verlegt und verklebt werden kann, kostengünstig ist und wobei die durch Verkleben erhältliche Klebeverbindung eine hohe Schälfestigkeit und Dichtheit bzw. Dichtigkeit aufweisen soll.

Die vorgenannte Aufgabe wird erfindungsgemäß durch die Merkmale des Anspruchs 1 gelöst. Der Grundgedanke der Erfindung ist darin zu sehen, dass der Befestigungsabschnitt nur an bestimmten Bereichen mit einem Klebstoff beschichtet wird. Bei Schälversuchen konnte überraschenderweise festgestellt werden, dass sich auch bei nur teilflächiger Klebstoffbeschichtung im Befestigungsabschnitt eine vergleichbar hohe Schälfestigkeit ergibt wie bei Bahnen, die eine vollflächige Beschichtung des Befestigungsabschnitts mit einem Klebstoff aufweisen. In Schälmessungen konnten beispielsweise an einem 50 mm breiten streifenförmigen Befestigungsabschnitt mit einer Prüfgeschwindigkeit von 100 mm/min Festigkeiten von 3 bis 200 N, insbesondere von 7 bis 100 N, weiter insbesondere von 10 bis 70 N, erreicht werden. Aufgrund der erfindungsgemäßen teilflächigen Beschichtung des Befestigungsabschnitts kann Klebstoff eingespart werden, was zu einem Absinken der Herstellungskosten der erfindungsgemäßen Bahn beiträgt, Es versteht sich, dass die vorangegangenen Ausführungen in derselben Weise auch für ein Klebeband mit einem Befestigungsabschnitt gelten, wobei der Befestigungsabschnitt lediglich teilflächig mit einem Klebstoff beschichtet ist und wobei Verklebungsbereiche durch klebstofffreie Bereiche des Befestigungsabschnitts voneinander getrennt sind.

Zum Schutz des Befestigungsabschnitts ist dieser im Nicht-Gebrauchszustand mit einer abziehbaren Schutzfolie beklebt, die vor der Verklebung der Bahn abgezogen werden muss.

Um eine Luft-/Winddichtheit und Wasserdichtigkeit zu gewährleisten, muß mindestens ein durchgängiger Pfad der Verklebung beim Verkleben der Bahn mit dem Untergrund oder der Bahnen miteinander erhalten werden. Um eine hohe Dichtheit bzw. Dichtigkeit sicherzustellen, können insbesondere auch zwei durchgängige Pfade der Verklebung vorgesehen sein. Bei einer bevorzugten Ausführungsform der Erfindung ist daher vorgesehen, dass die Verklebungsbereiche derart gebildet bzw. angeordnet sind, dass sich beim Verkleben der Bahn mit dem Untergrund oder mit einer weiteren Bahn über die gesamte Länge und/oder die gesamte Breite der Bahn eine im wesentlichen unterbrechungslose Klebeverbindung zwischen wenigstens einem Verklebungsbereich und dem Untergrund oder der weiteren Bahn ausbildet. Die Formulierung "im wesentlichen unterbrechungslos" stellt in diesem Zusammenhang klar, dass es für eine ausreichende Dichtheit bzw. Dichtigkeit unter Umständen ausreicht, wenn der Verklebungsbereich im wesentlichen vollständig mit dem Untergrund oder der weiteren Bahn verklebt ist und nur ein Abschnitt oder wenige Abschnitte des Verklebungsbereiches über eine kurze Länge von beispielsweise einigen Zentimetern nicht mit dem Untergrund oder der weiteren Bahn verklebt ist bzw. sind. Von Vorteil ist jedoch, wenn sich eine vollständig unterbrechungslose Klebeverbindung ausbildet.

Der Befestigungsabschnitt kann sich vorzugsweise in Längsrichtung der Bahn streifenförmig an einem oder beiden Außenrändern und/oder an der Ober-und/oder der Unterseite der Bahn erstrecken, vorzugsweise über die gesamte Länge der Bahn. Grundsätzlich ist es natürlich auch möglich, dass sich der Befestigungsabschnitt quer zur Längsrichtung der Bahn vorzugsweise über die gesamte Breite unter- und/oder oberseitig der Bahn erstreckt.

Nachfolgend werden vorteilhafte Ausgestaltungen der Erfindung am Beispiel einer erfindungsgemäßen Bahn im Einzelnen erläutert. Es versteht sich, dass die nachfolgend genannten Merkmale auch bei einem Klebeband der erfindungsgemäßen Art von Vorteil und vorgesehen sein können, auch wenn dies im einzelnen nicht beschrieben wird.

Vorzugsweise können sich zu dem vorgenannten Zweck die Verklebungsbereiche der Bahn unterbrechungslos über die gesamte Bahnlänge und/oder die gesamte Bahnbreite erstrecken. Durch geeignete Anordnung der Verklebungsbereiche, deren Breite und Form sowie durch geeignete Festlegung der Auftragsdicke kann bei geeigneter Auswahl eines Klebstoffs eine luftdichte und/oder wasserdichte Klebeverbindung sichergestellt werden.

Zum leichten Verkleben der Bahn mit einer weiteren Bahn kann auf der Oberseite und auf der Unterseite der Bahn jeweils wenigstens ein Befestigungsabschnitt vorgesehen sein. Es ist möglich, dass eine Bahn auf beiden Seiten eine teilflächige Klebstoffbeschichtung gemäß der zuerst beschriebenen Ausführungsform der Erfindung aufweist. Ebenso gut ist es möglich, dass auf der einen Seite eine teilflächige Klebstoffbeschichtung und auf der anderen Seite eine vollflächige Klebstoffbeschichtung vorgesehen ist. Beispielsweise kann weiter vorgesehen sein, dass ein auf der Oberseite vorgesehener Befestigungsabschnitt eine andere Breite aufweist als ein auf der Unterseite der Bahn vorgesehener Befestigungsabschnitt. Hier ist es möglich, dass ein vergleichsweise breiter Befestigungsabschnitt auf der Oberseite einer Bahn mit einem vergleichsweise schmaleren Befestigungsabschnitt auf der Unterseite einer weiteren Bahn verklebt wird, wobei die miteinander verklebten Bahnen zumindest im Bereich der Befestigungsabschnitte überlappen. Durch unterschiedliche Breiten der Befestigungsabschnitte ist es nicht notwendig, die Bahnen sehr genau aufeinander auszurichten, um die Befestigungsabschnitte zumindest überwiegend miteinander zur Deckung zu bringen. Auch bei nicht genauer Ausrichtung der Bahnen bzw. der Befestigungsabschnitte kann eine luft-/winddichte Klebeverbindung und eine hohe Wasserdichtigkeit bei ausreichender Festigkeit der Klebeverbindung gewährleistet werden.

Vorzugsweise sind die Verklebungsbereiche in regelmäßigen Abständen zueinander bzw. mit einem definierten Muster angeordnet. Beispielsweise können Verklebungsbereiche und nicht-verklebte Bereiche des Befestigungsabschnitts alternierend nebeneinander vorgesehen sein. Das gleiche gilt selbstverständlich auch für Verklebungsbereiche mit unterschiedlicher Auftragsdicke der Klebstoffbeschichtung, die ebenfalls alternierend nebeneinander angeordnet sein können. Dadurch wird das Verkleben der Bahnen insbesondere miteinander vereinfacht und eine hohe Festigkeit und Dichtheit bzw. Dichtigkeit der Klebeverbindung sichergestellt.

Der Verklebungsbereich kann linienförmig ausgebildet sein, wobei, vorzugsweise, der Befestigungsabschnitt eine Mehrzahl von geraden oder wellenartig nebeneinander liegenden linienförmigen Verklebungsbereichen aufweisen kann. Beispielsweise können gerade linienförmige Verklebungsbereiche nebeneinander liegend vorgesehen sein, wobei sich die Verklebungsbereiche über die gesamte Länge der Bahn erstrecken und von nicht-verklebten Bereichen des Befestigungsabschnitts quer zur Längsrichtung voneinander getrennt sein können. Bei der zuvor beschriebenen Ausführungsform erstrecken sich die Verklebungsbereiche der Bahn unterbrechungslos über die gesamte Bahnlänge. Es kann jedoch auch sein, dass die Verklebungsbereiche Unterbrechungen aufweisen und quer zur Längsrichtung versetzt zueinander angeordnet sind, so dass insgesamt wieder eine luft-/winddichte Verklebung bzw. die Wasserdichtigkeit der Klebeverbindung sichergestellt werden kann. Ebenso gut ist es möglich, dass der Befestigungsabschnitt netzartig mit dem Klebstoff beschichtet ist. Auch hier ergibt sich aufgrund der Netzstrukturen ein durchgängiger Pfad der Verklebung, der die Luft-/Winddichtheit und Wasserdichtigkeit gewährleistet. In diesem Zusammenhang können die Verklebungsbereiche eine Breite von 0,5 bis 30 mm, vorzugsweise von 1 bis 15 mm, insbesondere von 1,5 bis 8 mm, aufweisen.

Sind linienförmige Verklebungsbereiche vorgesehen, können alle Verklebungsbereiche die gleiche Breite aufweisen. Es versteht sich, dass auch Verklebungsbereiche mit unterschiedlicher Breite vorgesehen sein können, insbesondere auf unterschiedlichen Außenseiten der Bahn. Die Breite der linienförmigen Verklebungsbereiche hängt von deren Anzahl pro Befestigungsabschnitt und der Auftragtechnik des Klebstoffs ab, wobei der Klebstoffauftrag mittels (Auslauf-)Düsen, Walzen oder Sprühdüsen erfolgen kann. Auch ist es möglich, den Klebstoff durch Rotationssprühen oder Spinnblasen (melt blown) auf den Befestigungsabschnitt aufzutragen.

Der Befestigungsabschnitt kann jedoch auch eine Mehrzahl von spiral- oder Ωstrukturförmigen Verklebungsbereichen aufweisen. Die Spiral- oder Ω-Strukturen sind dabei derart angeordnet, dass sich beim Verkleben wiederum mindestens ein durchgängiger Pfad der Verklebung ergibt. Die Verklebungsbereiche können eine geringere Breite aufweisen, da aufgrund der Spiral- oder Ω-Struktur beim Verkleben der Bahn mit einem Untergrund oder mit einer weiteren Bahn eine Mehrzahl von durchgängigen Pfaden der Verklebung erhalten wird. Hier kann die Breite der die Spiral- oder Ω-Struktur bildenden Klebstofflinien 0,1 bis 5 mm, vorzugsweise 0,3 bis 3 mm, insbesondere 0,5 bis 2 mm betragen. Im Übrigen können auch Klebstofflinien mit unterschiedlicher Breite vorgesehen sein.

Wird der Klebstoff faserförmig auf den Befestigungsabschnitt aufgesprüht, kann der Befestigungsabschnitt vorzugsweise randomisiert aufgetragene Klebstoffasern mit einem Durchmesser von 0,001 bis 2 mm, vorzugsweise von 0,005 bis 1 mm, insbesondere von 0,01 bis 0,5 mm, aufweisen.

Letztlich können durch geeignete Auftragsmethoden Verklebungsbereiche in Form von geraden- oder wellenartigen Linien, netzartige Verklebungsbereiche oder spiral- oder Ω-strukturförmige Verklebungsbereiche erzeugt werden.

Die Breite des Befestigungsabschnitts kann 5 bis 150 mm, vorzugsweise 10 bis 100 mm, insbesondere 20 bis 80 mm, betragen. Dabei kann vorgesehen sein, dass der Befestigungsabschnitt an den Längsrändern und/oder an den Querrändem der Bahn vorgesehen ist. Wie bereits darauf hingewiesen worden ist, können auf der Oberseite und auf der Unterseite der Bahn Befestigungsabschnitte mit unterschiedlicher Breite vorgesehen sein, um das Verkleben der Bahnen miteinander zu vereinfachen.

Das Auftragsgewicht der Klebstoffbeschichtung bezogen auf den Befestigungsabschnitt kann 5 bis 500 g/m², vorzugsweise 20 bis 300 g/m² insbesondere 35 bis 200 g/m², betragen. Dadurch kann eine ausreichend feste Verklebung und eine hohe Dichtheit bzw. Dichtigkeit der Klebeverbindung sichergestellt werden.

Als Kleber kommen an sich aus dem Stand der Technik bekannte Systeme wie Hotmelts, Dispersionen und lösemittelhaltige Klebstoffe oder dgl, in Betracht, die auch vernetzt sein können. Die Kleber können Additive wie zum Beispiel UV-Stabilisatoren, Antioxidantien, Flammenhemmer oder dgl, enthalten.

Der Bedeckungsgrad des Befestigungsabschnitts mit einer Klebstoffbeschichtung kann 5 bis 90%, vorzugsweise 10 bis 70%, insbesondere 20 bis 50%, jeweils bezogen auf die Gesamtfläche des Befestigungsabschnitts betragen. Bei vollflächiger Beschichtung des Befestigungsabschnitts kann dagegen vorgesehen sein, dass der Bedeckungsgrad des Befestigungsabschnitts mit Verklebungsbereichen, die eine im wesentlichen gleich höhere Auftragsdicke aufweisen, 5 bis 90%, vorzugsweise 10 bis 70%, insbesondere 20 bis 50%, jeweils bezogen auf die Gesamtfläche des Befestigungsabschnitts beträgt. Der Bedeckungsgrad bezieht sich bei der zuletzt beschriebenen Ausführungsform somit auf die Verklebungsbereiche mit höherer Auftragsdicke, die gegenüber anderen Verklebungsbereichen mit geringerer Auftragsdicke nach außen überstehen. Die gewählten Bedeckungsgrade sind ausreichend, um das Verkleben der Bahn mit einem Untergrund oder mit einer weiteren Bahn bei hoher Festigkeit der Klebeverbindung und ausreichender Dichtheit bzw. Dichtigkeit zu ermöglichen.

Nachfolgend werden bevorzugte Ausführungsbeispiele der Erfindung beschrieben:

### Beispiel 1

Eine an sich bekannte Unterdeckbahn mit der Handelsbezeichnung Delta Vent S der Anmelderin, bestehend aus einem Verbund von 40 g/m² PP-Vlies, 40 g/m² mikroporöser Membran und 70g/m² PP-Vlies, wird einseitig an einem Rand mit einem 30 mm breiten Hotmelt-Streifen mit der Handelsbezeichnung Kleiberit SK 728.6 der Firma Kleiberit beschichtet, um den Befestigungsabschnitt zu erhalten. Das Flächengewicht beträgt 150 g/m². Der Auftrag erfolgt aus einer Breitschlitzdüse mit eingelegter Kammstruktur, so dass sechs streifenförmige Verklebungsbereiche mit jeweils einer Breite von 3 mm entstehen.

### Beispiel 2

Die Bahn gemäß Beispiel 1 wird zusätzlich am anderen Rand mit einem 80 mm breiten Hotmelt-Streifen mit einem Flächengewicht von 50 g/m² beschichtet, um den Befestigungsabschnitt zu erhalten. Dazu wird eine ähnliche, allerdings breitere Düse eingesetzt, die während des Auftrags orthogonal zum Rand der Bahn mit einer Auslenkung von 10 mm bewegt wird. Die Bahn wird unterhalb der Düse entlang bewegt. Dabei entstehen wellenartige Verklebungslinien mit einer Breite von ca. 4 mm, die beim Verkleben mit gerade verlaufenden linienförmigen Verklebungsbereichen einer anderen Bahn durchgehende Verklebungspfade bilden.

### Beispiel 3

Eine an sich bekannte Fassadenbahn mit der Handelsbezeichnung Delta Fassade der Anmelderin, bestehend aus einem Verbund von 120 g/m² PET-Vlies mit 80 g/m² mikroporöser Beschichtung wird auf der Beschichtungsseite mit Hilfe einer gravierten Walze netz-rauten-förmig mit einem Hotmelt mit der Handelsbezeichnung Eukalin 571 der Firma Kleiberit in einer Breite von 70 mm beschichtet, um den Befestigungsabschnitt zu erhalten. Die Breite der einzelnen Netzlinien beträgt 10 mm, das Flächengewicht 45 g/m² mit Bezug auf den gesamten Befestigungsabschnitt.

### Beispiel 4

Die Bahn aus Beispiel 3 wird zusätzlich an ihrem gegenüberliegenden Rand vollflächig mit einem Hotmelt mit einem Flächengewicht von 100 g/m² beschichtet, wobei der so erhaltene Befestigungsabschnitt eine Breite von 4 cm aufweist.

### Beispiel 5

Ein an sich bekanntes Housewrap mit dem Handelsnamen Vindsperre der Firma Nortett, bestehend aus einem Verbund von 35 g/m² PP-Vlies, 40 g/m² mikroporöser Membran und 17 g/m² PP-Vlies, wird beidseitig unter Verwendung einer Sprühdüse eines Systems mit der Handelsbezeichnung Dynafiber der Firma ITW Dynatec mit einem 40 mm breiten Streifen eines Hotmelts mit der Handelsbezeichnung Kleiberit SK 728.6 der Firma Kleiberit besprüht, so dass sich ein 50 mm breiter Streifen als Befestigungsabschnitt bildet. Das Flächengewicht beträgt 20 g/m². Je nach Einstellung der Sprühparameter werden Durchmesser der Klebstoff-Fasern von 0,01 - 0,5 mm erhalten.

### Beispiel 6

Eine an sich bekannte Dampfbremse mit dem Handelsnamen Delta Luxx der Anmelderin, bestehend aus einem Verbund aus 80 g/m² PP-Vlies mit 80 g/m² EVA-Beschichtung wird auf der Vliesseite spiralförmig mit einem Hotmelt mit dem Handelsnamen Lunamelt PS 3648 der Firma H. B. Fuller in einer Breite von 10 mm beschichtet. Das Flächengewicht beträgt 150 g/m², die Breite der Klebstofflinien 1 mm.

### Beispiel 7

Eine an sich bekannte Abdichtungsbahn mit dem Handelsnamen Delta Protekt der Anmelderin, bestehend aus einem Verbund von vier Lagen 55 g/m² PP-Vlies mit dazwischen angeordneten drei Lagen Folie aus EVA/PE mit einem Gesamtflächengewicht von 800 *glm²* wird beidseitig netzförmig mit Hilfe einer Auftragswalze mit einem Lösemittelacrylatkleber beschichtet und getrocknet. Das Trockenflächengewicht des streifenförmigen Befestigungsabschnitts beträgt jeweils 100 g/m².

### Beispiel 8

Eine an sich bekannte Bitumenabdichtungsbahn wird einseitig gemäß Beispiel 7 beschichtet.

### Beispiel 9

Eine an sich bekannte Mauerwerkssperre der Anmelderin bestehend aus einem Gemisch von PP/EVA/PE mit einem Flächengewicht von 400 g/m² wird beidseitig mit je drei geraden Klebstofflinien von je 5 mm Breite in einer Gesamtbreite von 30 mm beschichtet. Dazu wird ein Hotmelt mit der Handelsbezeichnung Helmitherm L99/32-26 der Firma Forbo verwendet. Das Flächengewicht des streifenförmigen Befestigungsabschnitts beträgt 70 g/m².

### Beispiel 10

Eine einseitig silikonisierte PE-Trägerfolie wird auf der silikonfreien Seite mit einer Acrylat-Kleber-Dispersion netzartig beschichtet, getrocknet und geschnitten, so dass sich ein Klebeband mit einer Breite von 60 mm ergibt. Das Flächengewicht des Klebstoffs beträgt 140 g/m², die Klebstofflinien des netzartigen Klebstoffauftrags haben Breiten von 1 mm, 1,5 mm und 2 mm.

Im einzelnen gibt es eine Vielzahl von Möglichkeiten, die erfindungsgemäße Bahn auszugestalten und weiterzubilden, wobei einerseits auf die abhängigen Patentansprüche und andererseits auf die nachfolgende Beschreibung eines bevorzugten Ausführungsbeispiels der Erfindung unter Bezugnahme auf die Zeichnung verwiesen wird. Im Übrigen lässt es die Erfindung bedarfsweise zu, die in den Ansprüchen und/oder die anhand der Zeichnung nachfolgend offenbarten und dargestellten Merkmale miteinander zu kombinieren, auch wenn dies nicht im Einzelnen beschrieben ist. In der Zeichnung zeigt
- Fig. 1a: eine Draufsicht auf einen Bahnabschnitt einer erfindungsgemäßen Bahn mit Verklebungsbereichen, die gerade verlaufende Klebstofflinien aufweisen,
- Fig. 1b: eine Draufsicht auf einen Bahnabschnitt einer erfindungsgemäßen Bahn mit netzartig angeordneten Klebstofflinien auf der Oberseite und gerade verlaufenden Klebstofflinien auf der Unterseite,
- Fig. 1c: eine Draufsicht auf einen Bahnabschnitt einer erfindungsgemäßen Bahn mit wellenförmig verlaufenden Klebstofflinien auf der Oberseite und gerade verlaufenden Klebstofflinien auf der Unterseite,
- Fig. 1d: eine Draufsicht auf einen Bahnabschnitt einer erfindungsgemäßen Bahn mit einem durch aufgesprühte Klebstofffasern gebildeten Verklebungsbereich auf der Oberseite und geraden Klebstofflinien auf der Unterseite,
- Fig. 2: eine Ansicht der Einzelheit X aus Fig. 1 und
- Fig. 3: eine Teil-Querschnittsansicht einer anderen Ausführungsform einer erfindungsgemäßen Bahn.

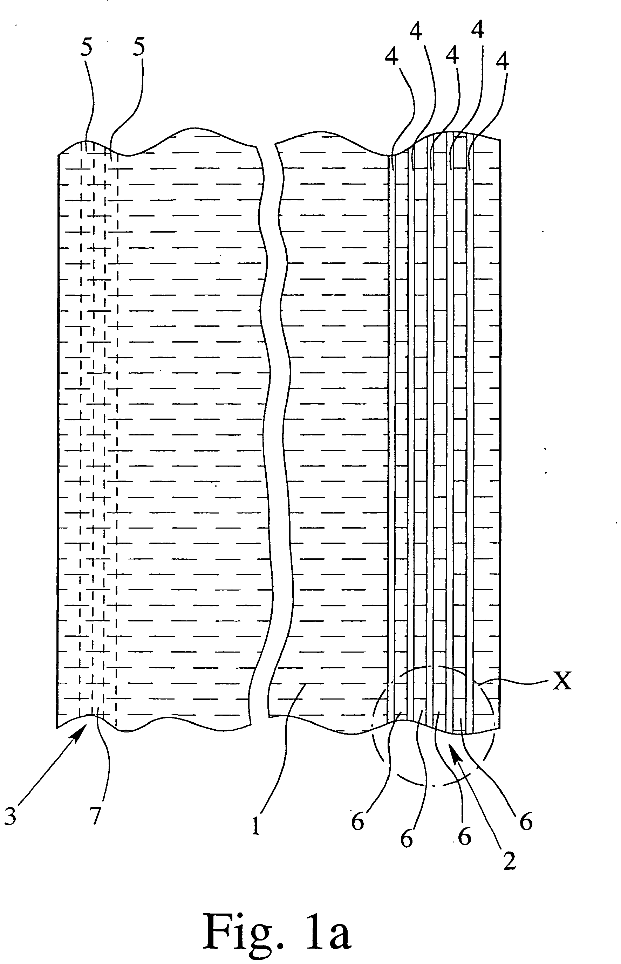

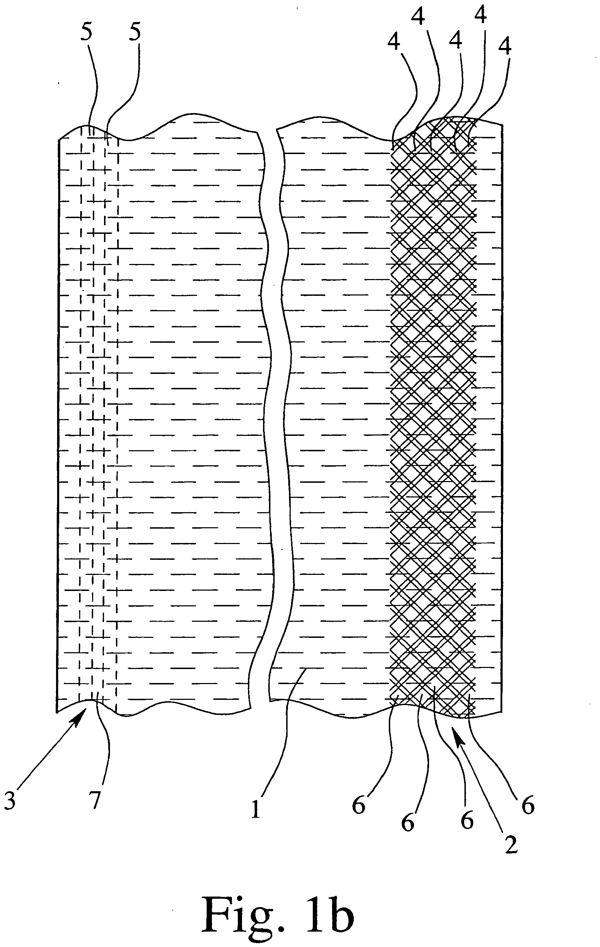

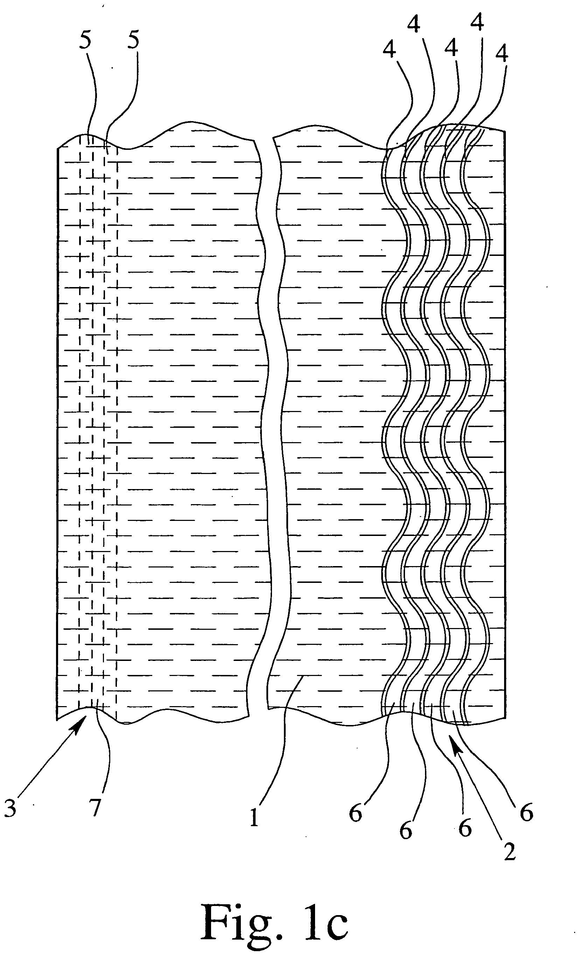

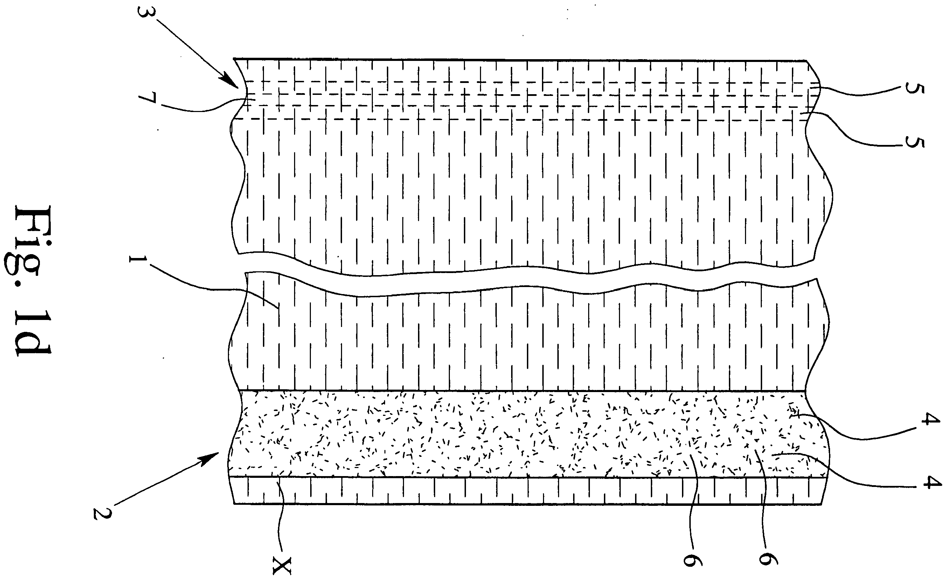

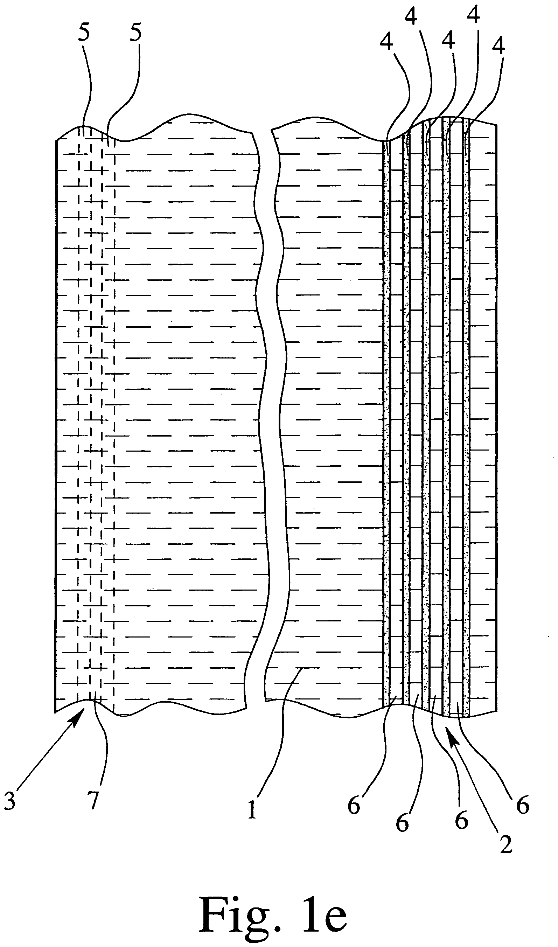

In Fig. 1 ist eine Bahn 1 mit einem Befestigungsabschnitt 2 auf der Oberseite der Bahn 1 und mit einem weiteren Befestigungsabschnitt 3 auf der Unterseite der Bahn 1 dargestellt, wobei die Befestigungsabschnitte 2, 3 zum Verkleben der Bahn 1 mit einer nicht dargestellten weiteren Bahn 1 oder zum Verkleben mit einem nicht dargestellten Untergrund vorgesehen sind. Die Befestigungsabschnitte 2, 3 sind teilflächig mit einem Klebstoff beschichtet und weisen eine Mehrzahl von durch die Klebstoffbeschichtung gebildeten Verklebungsbereichen 4, 5 auf. Die Verklebungsbereiche 4, 5 erstrecken sich in Längsrichtung der Bahn 1 an den Außenrändern über die gesamte Länge der Bahn 1. Die Verklebungsbereiche 4, 5 sind als gerade Klebstofflinien ausgebildet, die durch klebstofffreie Bereiche 6, 7 voneinander getrennt sind. Dadurch kann der Klebstoffverbrauch bei der Beschichtung des Befestigungsabschnitts 2, 3 gegenüber den aus dem Stand der Technik bekannten Bahnen gesenkt werden, was zu einer deutlichen Kosteneinsparung beiträgt. Gleichwohl ist eine durchgängige Verklebung der Bahn 1 mit einem Untergrund oder mit einer weiteren Bahn möglich, wobei sich über die gesamte Bahnlänge eine luftdichte und wasserdichte Klebeverbindung mit hoher Festigkeit ausbildet.

Die Bahn 1 weist auf der Oberseite den Befestigungsabschnitt 2 auf, der quer zur Längsrichtung der Bahn 1 durch die beiden äußeren Verklebungsbereiche 4 begrenzt ist. Auf der Unterseite der Bahn 1 ist der Befestigungsabschnitt 3 vorgesehen, der lediglich zwei Befestigungsbereiche 5 aufweist, die durch einen klebstofffreien Bereich 7 voneinander getrennt sind. Im Ergebnis ist die Breite des auf der Oberseite der Bahn 1 vorgesehenen Befestigungsabschnitts 2 größer als die Breite des auf der Unterseite der Bahn 1 vorgesehenen Befestigungsabschnitts 3. Werden Bahnen 1 überlappend miteinander verklebt, so kommt es zur Ausbildung einer Klebeverbindung zwischen dem Befestigungsabschnitt 2 auf der Oberseite der Bahn 1 und einem Befestigungsabschnitt 3 auf der Unterseite einer weiteren Bahn 1. Die unterschiedliche Breite der Befestigungsabschnitte 2, 3 ermöglicht es, überlappende Bahnen 1 miteinander zu verkleben, ohne dass die Befestigungsabschnitte 2, 3 genau aufeinander ausgerichtet werden müssen, um eine luft- und wasserdichte Klebeverbindung mit hoher Festigkeit sicherzustellen.

In Fig. 1b bis Fig. 1e ist jeweils eine Draufsicht auf einen Bahnabschnitt einer erfindungsgemäßen Bahn dargestellt, wobei sich die Verklebungsbereiche 4 gemäß Fig. 1b netzartig überlagern und gemäß Fig. 1c als wellenförmig verlaufende Klebstofflinien ausgebildet sind. Gemäß Fig. 1d ist es vorgesehen, dass sich der Befestigungsabschnitt 2 über eine größere Breite auf der Oberseite der Bahn 1 erstreckt und durch Aufsprühen von Klebstofffasern erhältlich ist. Die klebstofffreien Bereiche 6 des Befestigungsabschnitts 2 werden durch die Leerräume gebildet, die beim Aufsprühen von Klebstoff Fasern auf die Oberseite der Bahn 1 entstehen. Die Größe der klebstofffreien Bereiche 6 des Befestigungsabschnitts 2 wird daher durch die Sprühparameter beim Aufsprühen der Klebstoff-Fasern festgelegt. Im Ergebnis wird der Befestigungsbereich 2 "vollflächig" mit Klebstoff-Fasern besprüht, wobei diese die Oberseite der Bahn 1 im Bereich des Befestigungsabschnitts 2 jedoch nicht vollständig bedecken. Die diskreten Bereiche der Beschichtung werden durch die einzelnen Klebstoff-Fasern selbst erzeugt. Bei der in Fig. 1e dargestellten Bahn weist der Befestigungsabschnitt 2 mehrere Verklebungsbereiche 4 auf, die ebenfalls durch Aufsprühen von Klebstofffasern erhältlich sind.

In Fig. 2 ist eine Teil-Querschnittsansicht der Bahn 1 im Bereich des Befestigungsabschnitts 2 dargestellt. Wie sich aus Fig. 2 insbesondere ergibt, weisen alle Verklebungsbereiche 4 dieselbe Breite auf. Die klebstofffreien Bereiche 6 weisen dagegen eine größere Breite auf als die Verklebungsbereiche 4. Es ist auch möglich, dass die Verklebungsbereiche 4 und die klebstofffreien Bereiche 6 gleich breit sind.

In Fig. 3 ist eine Teil-Querschnittsansicht einer weiteren Ausführungsform einer Bahn 1 dargestellt. Die Verklebungsbereiche 8, 9 bilden einen Befestigungsabschnitt 10 zum Verkleben der Bahn 1 mit einem Untergrund oder zum Verkleben mit einer weiteren Bahn 1. Der Befestigungsabschnitt 10 ist vollflächig mit einem Klebstoff beschichtet, wobei die durch die Klebstoffbeschichtung gebildeten Verklebungsbereiche 8, 9 eine unterschiedliche Auftragsdicke der Klebstoffbeschichtung aufweisen. Dies ermöglicht das Verkleben der Bahn 1 auch mit nicht-ebenen Oberflächen bei insgesamt geringerem Klebstoffverbrauch im Vergleich zum Verkleben von solchen Bahnen, die eine Klebstoffbeschichtung mit konstanter Auftragsdicke über den gesamten Befestigungsabschnitt aufweisen.

## Patentansprüche

1. Bahn (1) zum Einsatz im Baubereich, mit einem lediglich am einen Außenrand der Bahn vorgesehenen Befestigungsabschnitt (2) auf der Oberseite der Bahn (1) und einem weiteren, lediglich am anderen Außenrand der Bahn vorgesehenen Befestigungsabschnitt (3) auf der Unterseite der Bahn (1), wobei die Befestigungsabschnitte (2, 3) zum Verkleben der Bahn mit einem Untergrund oder zum Verkleben mit einer weiteren Bahn (1) vorgesehen sind, wobei wenigstens ein Befestigungsabschnitt (2, 3) teilflächig mit einem Klebstoff beschichtet ist und wenigstens zwei durch die Klebstoffbeschichtung gebildete Verklebungsbereiche (4, 5) aufweist, wobei der Befestigungsabschnitt (2, 3) im Nicht-Gebrauchszustand mit einer abziehbaren Schutzfolie beklebt ist, und wobei benachbarte Verklebungsbereiche (4, 5) eines Befestigungsabschnitts (2, 3) zumindest teilweise durch wenigstens einen klebstofffreien Bereich (6, 7) des Befestigungsabschnitts (2, 3) voneinander getrennt und derart gebildet sind, dass sich beim Verkleben der Bahn mit dem Untergrund oder mit einer weiteren Bahn (1) über die gesamte Länge der Bahn (1) eine im wesentlichen unterbrechungslose Klebverbindung zwischen den wenigstens zwei Verklebungsbereichen (4, 5,) und dem Untergrund oder der weiteren Bahn (1) zur Erzielung einer Luft-/Winddichtheit und Wasserdichtigkeit ergibt.

2. Bahn (1) nach Anspruch 1, **dadurch gekennzeichnet, dass** sich wenigstens ein Verklebungsbereich (4, 5, 8, 9) der Bahn unterbrechungslos über die gesamte Bahnlänge und/oder über die gesamte Bahnbreite erstreckt.

3. Bahn (1) nach einem der vorhergehenden Ansprüche, **dadurch gekennzeichnet, dass** sich eine luftdichte und/oder wasserdichte Klebeverbindung ausbildet,

4. Bahn (1) nach einem der vorhergehenden Ansprüche, **dadurch gekennzeichnet, dass** auf beiden Außenseiten der Bahn jeweils wenigstens ein Befestigungsabschnitt (2, 3, 10) vorgesehen ist.

5. Bahn (1) nach einem der vorhergehenden Ansprüche, **dadurch gekennzeichnet, dass** auf unterschiedlichen Außenseiten der Bahn vorgesehene Befestigungsabschnitte (2, 3) eine unterschiedliche Breite aufweisen.

6. Bahn (1) nach einem der vorhergehenden Ansprüche, **dadurch gekennzeichnet, dass** alle Verklebungsbereiche (4, 5, 8, 9) eine gleiche Breite aufweisen.

7. Bahn (1) nach einem der vorhergehenden Ansprüche, **dadurch gekennzeichnet, dass** der Verklebungsbereich (4, 5, 8, 9) eine Breite von 0,5 bis 30 mm, vorzugsweise von 1 bis 15 mm, insbesondere von 1,5 bis 8 mm, aufweist.

8. Bahn (1) nach einem der vorhergehenden Ansprüche, **dadurch gekennzeichnet, dass** der Befestigungsabschnitt (2, 3, 10) vorzugsweise randomisiert aufgetragene Klebstofffasern mit einem Durchmesser von 0,001 bis 2 mm, vorzugsweise von 0,005 bis 1 mm, insbesondere von 0,01 bis 0,5 mm, aufweist.

9. Bahn (1) nach einem der vorhergehenden Ansprüche, **dadurch gekennzeichnet, dass** die Breite des Befestigungsabschnitts (2, 3, 10) 5 bis 150 mm, vorzugsweise 10 bis 100 mm, insbesondere 20 bis 80 mm, beträgt.

10. Bahn (1) nach einem der vorhergehenden Ansprüche, **dadurch gekennzeichnet, dass** das Auftragsgewicht der Klebstoffbeschichtung 5 bis 500 g/m², vorzugsweise 20 bis 300 g/m², insbesondere 35 bis 200 g/m², beträgt, jeweils bezogen auf den Befestigungsabschnitt (2, 3, 10).

11. Bahn (1) nach einem der vorhergehenden Ansprüche, **dadurch gekennzeichnet, dass** der Bedeckungsgrad des Befestigungsabschnitts (2, 3, 10) mit der Klebstoffbeschichtung 5 bis 90%, vorzugsweise 10 bis 70%, insbesondere 20 bis 50%, beträgt, jeweils bezogen auf die Gesamtfläche des Befestigungsabschnitts (2, 3, 10).

12. Bahn (1) nach einem der vorhergehenden Ansprüche, **dadurch gekennzeichnet, dass** der Bedeckungsgrad des Befestigungsabschnitts (2, 3, 10) mit Verklebungsbereichen (8) mit einer gleichen höheren Auftragsdicke 5 bis 90%, vorzugsweise 10 bis 70%, insbesondere 20 bis 50%, beträgt, jeweils bezogen auf die Gesamtfläche des Befestigungsabschnitts (2, 3, 10).

## Claims

1. Sheet (1) for use in the construction field, having a fastening section (2) - provided only on one outer edge of the sheet - on the upper side of the sheet (1), and a further fastening section (3) - provided only on the other outer edge of the sheet - on the underside of the sheet (1), wherein the fastening sections (2, 3) are provided for adhesively fastening the sheet to a substrate or for adhesively fastening the sheet to a further sheet (1), wherein at least one fastening section (2, 3) is coated with an adhesive over part of its surface and has at least two adhesive fastening regions (4, 5) which are formed by the adhesive coating, wherein the fastening section (2, 3) in the not-in-use state is stuck to a removable protective film, and wherein adjacent adhesive fastening regions (4, 5) of a fastening section (2, 3) are at least partially separated from each other by means of at least one adhesive-free region (6, 7) of the fastening section (2, 3) and formed in such a way that with the sheet being adhesively fastened to the substrate or to a further sheet (1) an essentially continuous adhesive bond between the at least two adhesive fastening regions (4, 5) and the substrate or the further sheet (1) is created over the entire length of the sheet (1) for achieving air-tightness/wind-tightness and water-tightness.

2. Sheet (1) according to Claim 1, **characterized in that** at least one adhesive fastening region (4, 5, 8, 9) of the sheet extends continuously over the entire sheet length and/or over the entire sheet width.

3. Sheet (1) according to one of the preceding claims, **characterized in that** an airtight and/or watertight adhesive bond is formed.

4. Sheet (1) according to one of the preceding claims, **characterized in that** at least one fastening section (2, 3, 10) is provided in each case on both outer sides of the sheet.

5. Sheet (1) according to one of the preceding claims, **characterized in that** fastening sections (2, 3) which are provided on different outer sides of the sheet have a different width.

6. Sheet (1) according to one of the preceding claims, **characterized in that** all the adhesive fastening regions (4, 5, 8, 9) have an equal width.

7. Sheet (1) according to one of the preceding claims, **characterized in that** the adhesive fastening region (4, 5, 8, 9) has a width of 0.5 to 30 mm, preferably of 1 to 15 mm, especially of 1.5 to 8 mm.

8. Sheet (1) according to one of the preceding claims, **characterized in that** the fastening section (2, 3, 10) has adhesive fibres, preferably applied in a randomised manner, with a diameter of 0.001 to 2 mm, preferably of 0.005 to 1 mm, especially of 0,01 to 0.5 mm.

9. Sheet (1) according to one of the preceding claims, **characterized in that** the width of the fastening section (2, 3, 10) is 5 to 150 mm, preferably 10 to 100 mm, especially 20 to 80 mm.

10. Sheet (1) according to one of the preceding claims, **characterized in that** the coat weight of the adhesive coating is 5 to 500 glm², preferably 20 to 300 g/m², especially 35 to 200 g/m², with regard to the fastening section (2, 3, 10) in each case.

11. Sheet (1) according to one of the preceding claims, **characterized in that** the degree of coverage of the fastening section (2, 3, 10) with the adhesive coating is 5 to 90%, preferably 10 to 70%, especially 20 to 50%, with regard to the overall area of the fastening section (2, 3, 10) in each case.

12. Sheet (1) according to one of the preceding claims, **characterized in that** the degree of coverage of the fastening section (2, 3, 10) with adhesive regions (8) with an equal higher coating thickness is 5 to 90%, preferably 10 to 70%, especially 20 to 50%, with regard to the overall area of the fastening section (2, 3, 10) in each case.

## Revendications

1. Bande (1) à utiliser dans le domaine de la construction, comportant un segment de fixation (2) sur la face supérieure de la bande (1), segment uniquement prévu sur le bord externe de la bande, et un autre segment de fixation (3) sur la face inférieure de la bande (1), segment uniquement prévu sur l'autre bord externe de la bande, les segments de fixation (2, 3) étant prévus pour coller la bande à un support ou pour le collage à une autre bande (1), au moins un segment de fixation (2, 3) étant partiellement revêtu d'un adhésif et comportant au moins deux zones de collage (4, 5) formées du revêtement adhésif, le segment de fixation (2, 3) étant recouvert d'une feuille de protection retirable lorsqu'il n'est pas utilisé et les zones de collage adjacentes (4, 5) d'un segment de fixation (2, 3) étant séparées l'une de l'autre, au moins en partie, par au moins une zone sans adhésif (6, 7) du segment de fixation (2, 3) et étant réalisées de telle sorte que l'on obtienne, lors du collage de la bande au support ou à une autre bande (1), sur toute la longueur de la bande (1), une liaison adhésive sensiblement continue entre les deux zones de collage (4, 5) ou plus et le support ou l'autre bande (1) pour produire une étanchéité à l'air/au vent et à l'eau.

2. Bande (1) selon la revendication 1, **caractérisée en ce qu'**au moins une zone de collage (4, 5, 8, 9) de la bande s'étend de manière continue sur l'ensemble de la longueur de la bande et/ou sur l'ensemble de la largeur de la bande.

3. Bande (1) selon l'une quelconque des revendications précédentes, **caractérisée en ce qu'**il se forme une liaison adhésive étanche à l'air et/ou étanche à l'eau.

4. Bande (1) selon l'une quelconque des revendications précédentes, **caractérisée en ce qu'**on a prévu, des deux côtés externes de la bande, au moins un segment de fixation (2, 3, 10).

5. Bande (1) selon l'une quelconque des revendications précédentes, **caractérisée en ce que** les segments de fixation (2, 3) prévus sur des côtés externes différents de la bande présentent une largeur différente.

6. Bande (1) selon l'une quelconque des revendications précédentes, **caractérisée en ce que** toutes les zones de collage (4, 5, 8, 9) présentent une même largeur.

7. Bande (1) selon l'une quelconque des revendications précédentes, **caractérisée en ce que** la zone de collage (4, 5, 8, 9) présente une largeur comprise entre 0,5 et 30 mm, de préférence entre 1 et 15 mm, en particulier entre 1,5 et 8 mm.

8. Bande (1) selon l'une quelconque des revendications précédentes, **caractérisée en ce que** le segment de fixation (2, 3, 10) présente des fibres adhésives, appliquées de préférence de manière aléatoire, avec un diamètre compris entre 0,001 et 2 mm, de préférence entre 0,005 et 1 mm, en particulier entre 0,01 et 0,5 mm,

9. Bande (1) selon l'une quelconque des revendications précédentes, **caractérisée en ce que** la largeur du segment de fixation (2, 3, 10) est comprise entre 5 et 150 mm, de préférence entre 10 et 100 mm, en particulier entre 20 et 80 mm.

10. Bande (1) selon l'une quelconque des revendications précédentes, **caractérisée en ce que** le poids d'application du revêtement adhésif est compris entre 5 et 500 g/m², de préférence entre 20 et 300 g/m², en particulier entre 35 et 200 g/m², relativement au segment de fixation (2, 3, 10).

11. Bande (1) selon l'une quelconque des revendications précédentes, **caractérisée en ce que** le degré de couverture du segment de fixation (2, 3, 10) avec le revêtement adhésive est compris entre 5 et 90%, de préférence entre 10 et 70%, en particulier entre 20 et 50%, relativement à la surface totale du segment de fixation (2, 3, 10).

12. Bande (1) selon l'une quelconque des revendications précédentes, **caractérisée en ce que** le degré de couverture du segment de fixation (2, 3, 10) avec les zones de collage (8), dont l'épaisseur d'application plus élevée est identique, est comprise entre 5 et 90%, de préférence entre 10 et 70%, en particulier entre 20 et 50%, relativement à la surface totale du segment de fixation (2, 3, 10),
